# EUROPEAN PATENT SPECIFICATION

(11) **EP 2 500 594 B1**
(45) Date of publication and mention of the grant of the patent: **24.07.2019**
(21) Application number: 10829678.1
(22) Date of filing: 27.10.2010
(51) Int. Cl.: F16D 3/68, B62D 5/04, F16D 3/12

(54) **SHAFT COUPLING MECHANISM**
WELLENKUPPLUNGSMECHANISMUS
MÉCANISME D'ACCOUPLEMENT D'ARBRES

(30) Priority: 10.11.2009 JP 2009257566
(43) Date of publication of application: 19.09.2012
(73) Proprietor: Oiles Corporation, Tokyo 108-0075 (JP)
(72) Inventor: NAKAGAWA, Noboru, Fujisawa-shi Kanagawa 252-0811 (JP); YOSHIMOTO, Daisuke, Fujisawa-shi Kanagawa 252-0811 (JP)
(74) Representative: J A Kemp
(86) International application number: PCT/JP2010/006355
(87) International publication number: WO 2011/058710

(56) References cited:
- EP-A1- 1 830 089
- JP-A- 58 211 022
- JP-Y1- 45 004 409
- US-A- 3 396 556
- US-A- 6 123 620
- US-A1- 2003 176 222

## Description

### TECHNICAL FIELD

The present invention relates to a shaft coupling mechanism suitable for coupling a rotating shaft on a rotating source side such as an electric motor in an electric power steering apparatus and a rotating shaft on an operating side such as a steering shaft of an automobile.

### BACKGROUND ART

An electric power steering apparatus, for example, is for facilitating the manual steering of a steering wheel by adding a torque based on the rotation of an output rotating shaft of an electric motor to a torque based on the rotation of the steering wheel which is manually operated. In such an electric power steering apparatus, the steering shaft on the steering wheel side and the rotating shaft on the output rotating shaft side of the electric motor are coupled by means of a shaft coupling mechanism (a coupling).

In the case where the steering shaft and the rotating shaft are coupled by means of the shaft coupling mechanism, there is a possibility that an impact at the time of the reversing of the output rotating shaft of the electric motor and the vibration of the brushes of the electric motor are transmitted to the steering wheel through the shaft coupling mechanism and the steering shaft, thereby causing an unpleasant steering feel to the driver. To avoid this, it has been proposed to provide a spacer made of such as rubber or soft resin for the shaft coupling mechanism. However, if the spacer is made softer by placing emphasis on the reduction of the impact and vibration, since the soft spacer is likely to undergo creep deformation, backlash can occur in the shaft coupling mechanism owing to the permanent deformation of the spacer due to the repeated load on the spacer. There is a possibility that this can also make the driver's steering feel unpleasant. On the other hand, if the spacer is made hard by placing emphasis on the durability, the steering feel improves contrary to the above since there is no backlash. However, the steering feel becomes uncomfortable due to the impact and vibration transmitted to the steering wheel, as described above.

Accordingly, there has also been proposed a shaft coupling mechanism for an electric power steering apparatus which is comprised of a pair of rotation transmitting members, an intermediate interposed member which is interposed between this pair of rotation transmitting members and is elastically deformable, one coupling base body which is coupled to one rotating shaft, and another coupling base body which is coupled to another rotating shaft. This proposed shaft coupling mechanism is one in which, even if it is used over a long-term period, backlash in the rotating direction is difficult to occur between one rotating shaft, e.g., a rotating shaft coupled to the output rotating shaft of the electric motor, and another rotating shaft, e.g., the steering shaft coupled to the steering wheel, which makes it possible to reduce the transmission to the steering wheel of the impact at the time of the reversing of the electric motor and the brush vibration, and which hence excels in durability and prevents the steering feel from becoming uncomfortable (refer to Patent Document 4).

### PRIOR ART DOCUMENTS

### PATENT DOCUMENTS

Patent document 1: JP-T-2002-518242
Patent document 2: JP-A-2004-148990
Patent document 3: JP-A-2004-149070
Patent document 4: JP-A-2006-183676

EP-A1-1,830,089 discloses a shaft coupling mechanism.

### DISCLOSURE OF THE INVENTION

### PROBLEMS TO BE SOLVED BY THE INVENTION

Incidentally, with such a proposed shaft coupling mechanism, each of the coupling base bodies has a base portion and axial projecting portions projecting integrally in an axial direction from one axial surface of this base portion, with the result that there is a possibility that, in the axial relative displacement of one rotating shaft relative to the other rotating shaft, the axial projecting portions of each coupling base body are pressed against and brought into contact with the base portion of the mating coupling base body, and therefore collision noise can occur due to this pressing and contact. Furthermore, there is a possibility that if such an axial relative displacement occurs in the transmission of the rotation of one rotating shaft to the other rotating shaft, unpleasant frictional noise can occur due to the pressing and contact. Furthermore, because the axial relative approach and displacement of one rotating shaft with respect to the other rotating shaft cannot be absorbed, there is a possibility that it is impossible to reduce the transmission to the steering wheel of the brush vibration which causes axial relative displacement of one rotating shaft with respect to the other rotating shaft by causing axial elastic compressive deformation in radial projecting portions of the intermediate interposed member.

If the axial length of the axial projecting portion of each coupling base body is made short in order to avoid such pressing and contact, the contact area in the direction about the axis of the axial projecting portion of each coupling base body with respect to the intermediate interposed member becomes small, in which case the intermediate interposed member can be abnormally deformed and the intermediate interposed member is subjected to excessive elastic compressive deformation, thereby possibly causing deterioration in the durability.

Such a problem can also occur in the case of the shaft coupling mechanism which is not provided with the rotation transmitting members proposed in Patent Document 4, and in which only the intermediate interposed member is provided between both coupling base bodies.

The present invention has been devised in view of the above-described problems, and its object is to provide a shaft coupling mechanism which makes it possible to eliminate the occurrence of collision noise in the axial relative displacement of one rotating shaft relative to the other rotating shaft and does not generate unpleasant frictional noise in the transmission of the rotation of one rotating shaft to the other rotating shaft, and which makes it possible to secure, as desired, a contact area in the direction about the axis of the axial projecting portion of each coupling base body with respect to the radial projecting portion of the intermediate interposed member, and to avoid excessive elastic compressive deformation of the radial projecting portions of the intermediate interposed member interposed between the coupling base bodies, thereby suppressing deterioration in the durability.

### MEANS FOR SOLVING THE PROBLEMS

A shaft coupling mechanism in accordance with the present invention for coupling first and second rotating shafts by being disposed between the first and second rotating shafts so as to transmit a rotation of the first rotating shaft to the second rotating shaft, comprises: a first coupling base body which is coupleable to the first rotating shaft, a second coupling base body which is coupleable to the second rotating shaft, and an intermediate interposed member which is interposed between the first and the second coupling base bodies, wherein the first coupling base body has a first base portion and a first axial projecting portion formed integrally with the first base portion in such a manner as to project in an axial direction from one axial surface of the first base portion, toward the second coupling base body, said second coupling base body has a second base portion and a second axial projecting portion formed integrally with the second base portion in such a manner as to project in the axial direction from one axial surface of the second base portion toward the first coupling base body, the first axial projecting portion and the second axial projecting portion are disposed with an interval therebetween in a direction about an axis, and the intermediate interposed member has a third base portion interposed between the first base portions and the second base portion in the axial direction, at least a pair of radial projecting portions formed integrally on the
third base portion in such a manner as to be spaced apart from each other in the direction about the axis and project radially from an outer peripheral edge of the third base portion, a third axial projecting portion formed integrally on the third base portion in such a manner as to project in the axial direction from one axial surface of the third base portion, and a forth axial projecting portion formed integrally on the third base portion in such a manner as to project in the axial direction from another axial surface of the third base portion, each of the pair of radial projecting portions of the intermediate interposed member having a smaller rigidity than the rigidity of the first and second axial projecting portion and being elastically deformable, at least one of the first rotating shaft and the first base portion of the first coupling base body at its one axial surface being in contact with an axial surface of the third axial projecting portion, while at least one of the second rotating shaft and the second base portion of the second coupling base body at its one axial surface being in contact with an axial surface of the forth axial projecting portion, and wherein the first axial projecting portion of the first coupling base body is disposed in one circumferential gap between adjacent radial projecting portions in the direction about the axis, is in contact with both one side surface in the direction about the axis of one radial projecting portion and another side surface in the direction about the axis of another radial projecting portion at its both side surfaces in the direction about the axis, extends across and beyond the other axial surface of the third base portion, and, at its axial distal end surface, opposes the one axial surface of the second base portion of the second coupling base body with a clearance therebetween, while the second axial projecting portion of the second coupling base body is disposed in another circumferential gap between adjacent radial projecting portions gap in the direction about the axis, is in contact with both another side surface in the direction about the axis of the one radial projecting portion and one side surface in the direction about the axis of the other radial projecting portion at its both side surfaces in the direction about the axis, extends across and beyond the one axial surface of the third base portion, and, at its axial distal end surface, opposes the one axial surface of the first base portion of the first coupling base body with a clearance therebetween, characterized in that
said intermediate interposed member has one protrusion formed integrally on and projecting in the axial direction from the one axial surface of the third base portion and another protrusion formed integrally on and projecting in the axial direction from the other axial surface of the third base portion, the one protrusion forming a clearance, which is smaller than the corresponding clearance, between its axial distal end surface and the one axial surface of the first base portion of said first coupling base body, while the other protrusion forming a clearance, which is smaller than the corresponding clearance, between its axial distal end surface and the one axial surface of the second base portion of said second coupling base body.

According to the shaft coupling mechanism in accordance with the present invention, at least one of the one rotating shaft and the first base portion of the one coupling base body at its one axial surface is in contact with an axial surface of the second axial projecting portion, while at least one of the other rotating shaft and the first base portion of the other coupling base body at its one axial surface is in contact with an axial surface of the third axial projecting portion. Further, the first axial projecting portion of the one coupling base body extends across and beyond the other axial surface of the second base portion, and, at its axial distal end surface, opposes the one axial surface of the first base portion of the other coupling base body with a clearance therebetween, while the first axial projecting portion of the other coupling base body extends across and beyond the one axial surface of the second base portion, and, at its axial distal end surface, opposes the one axial surface of the first base portion of the one coupling base body with a clearance therebetween. Therefore, it is possible to avoid contact between the distal end surface of the axial projecting portion of the one coupling base body and the one axial surface of the first base portion of the other coupling base body and contact between the distal end surface of the axial projecting portion of the other coupling base body and the one axial surface of the first base portion of the one coupling base body. Furthermore, it is possible to allow the axial projecting portions of the one and the other coupling base bodies to be brought into contact with overall surfaces of the radial projecting portions of the intermediate interposed member in the direction about the axis. Additionally, it is possible to eliminate the occurrence of collision noise in the relative axial displacement of the one rotating shaft relative to the other rotating shaft, and unpleasant frictional noise is not generated in the transmission of the rotation of the one rotating shaft to the other rotating shaft. Furthermore, it is possible to secure, as desired, a contact area in the direction about the axis of the axial projecting portion of each coupling base body with respect to the radial projecting portion of the intermediate interposed member, and to avoid excessive elastic compressive deformation of the radial projecting portions of the intermediate interposed member, thereby making it possible to improve the durability.

In the shaft coupling mechanism in accordance with the present invention, the one coupling base body may be directly coupled to the one rotating shaft, but may be indirectly coupled to the one rotating shaft through another rotation transmitting mechanism such as a gear mechanism, and the same also applies to the other coupling base body as well.

The shaft coupling mechanism in accordance with the present invention may be a shaft coupling mechanism for an electric power steering apparatus, in which case the one rotating shaft may be adapted to be coupled to an output rotating shaft of an electric motor, while the other rotating shaft may be adapted to be coupled to a steering shaft of an automobile

### ADVANTAGES OF THE INVENTION

According to the present invention, it is possible to provide a shaft coupling mechanism which makes it possible to eliminate the occurrence of collision noise in the axial relative displacement of one rotating shaft relative to the other rotating shaft and does not generate unpleasant frictional noise in the transmission of the rotation of one rotating shaft to the other rotating shaft, and which makes it possible to secure, as desired, a contact area in the direction about the axis of the axial projecting portion of each coupling base body with respect to the radial projecting portion of the intermediate interposed member, and to avoid excessive elastic compressive deformation of the radial projecting portions of the intermediate interposed member interposed between the coupling base bodies, thereby suppressing deterioration in the durability.

### BRIEF DESCRIPTION OF THE DRAWINGS

Fig. 1 is an explanatory perspective view of a preferred embodiment of the invention;
Fig. 2 is an explanatory front elevational view of the embodiment shown in Fig. 1; and
Fig. 3 is an explanatory cross-sectional view, taken in the direction of arrows along line III - III, of the embodiment shown in Fig. 2.

### MODE FOR CARRYING OUT THE INVENTION

Next, a more detailed description will be given of the mode of carrying out the invention on the basis of a preferred embodiment illustrated in the drawings. It should be noted that the present invention is not limited to this embodiment.

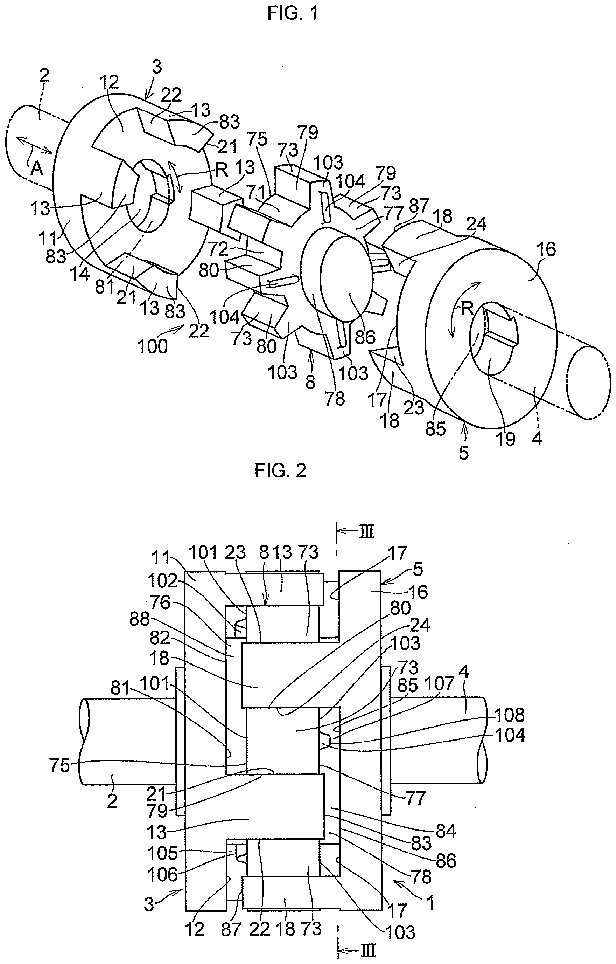

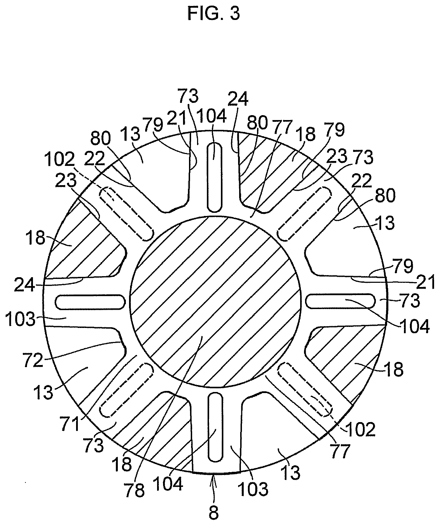

In Figs. 1 to 3, a shaft coupling mechanism 1 for an electric power steering apparatus in accordance with this embodiment is comprised of a coupling base body 3 coupled to a rotating shaft 2 on an electric motor side of an electric power steering apparatus; a coupling base body 5 coupled to a steering shaft 4 serving as a rotating shaft; and an intermediate interposed member 8 interposed between both coupling base bodies 3 and 5 and adapted to transmit the rotation of the rotating shaft 2 in an R direction to the steering shaft 4 in cooperation with both coupling base bodies 3 and 5.

The coupling base body 3 which is rigid includes an annular base portion 11; two pairs of axial projecting portions 13 which project integrally from one annular surface 12 in an axial direction, i.e., an A direction, of the base portion 11 toward a base portion 16 of the coupling base body 5 in the A direction and are arranged at equiangular intervals of 90° in the direction about the axis, i.e., in the R direction; and a through hole 14 formed in the center of the base portion 11.

The rotating shaft 2 may be fitted and secured to the base portion 11 in the through hole 14 in which the rotating shaft 2 is inserted as in this embodiment. However, the rotating shaft 2 may be fitted and secured to the base portion 11 in a bottomed recess which is formed in the center of the base portion 11, or may, still alternately, be integrally formed with the base portion 11.

The coupling base body 5 which is rigid is formed in the same way as the coupling base body 3 and includes the annular base portion 16; two pairs of axial projecting portions 18 which project integrally from one annular surface 17 in the A direction of the base portion 16 toward the base portion 11 of the coupling base body 3 in the A direction and are arranged at equiangular intervals of 90° in the R direction; and a through hole 19 formed in the center of the base portion 16.

The steering shaft 4 may also be fitted and secured to the base portion 16 in the through hole 19 in which the steering shaft 4 is inserted as in this embodiment. However, the steering shaft 4 may be fitted and secured to the base portion 16 in a bottomed recess which is formed in the center of the base portion 16, or may, still alternately, be integrally formed with the base portion 16.

Each of the axial projecting portions 13 has in the R direction a pair of flat side surfaces 21 and 22 serving as rotation transmitting rigid surfaces, and each of the axial projecting portions 18 also has in the R direction a pair of side surfaces 23 and 24 serving as rotation transmitting rigid surfaces.

The intermediate interposed member 8 has a smaller rigidity than the coupling base bodies 3 and 5, is elastically deformable, and is formed of a rubber elastic body such as urethane rubber, polyester elastomer, or the like. The intermediate interposed member 8 includes a disk-shaped base portion 71 interposed between the base portions 11 and 16 in the A direction concentrically with the base portions 11 and 16; four pairs of radial projecting portions 73 which are provided integrally with the base portion 71 in such a manner as to extend radially from a cylindrical outer peripheral edge 72 of the base portion 71 and are arranged in such a manner as to be spaced apart from each other at equiangular intervals of 45° in the R direction; an axial projecting portion 76 formed integrally with the base portion 71 in such a manner as to project from one flat surface 75 in the A direction of the base portion 71 toward the base portion 11 in the A direction; an axial projecting portion 78 formed integrally with the base portion 71 in such a manner as to project from the other flat surface 77 in the A direction of the base portion 71 toward the base portion 16 in the A direction; protrusions 102 which are each formed integrally with one flat surface 101 in the A direction of every other elastically deformable radial projecting portion 73 and with the one flat surface 75 of the base portion 71 flush with the surface 101 in such a manner as to protrude in the A direction from the surfaces 101 and 75 and extend radially over the surfaces 101 and 75; and protrusions 104 which, in the same way as the protrusions 102, are each formed integrally with the other flat surface 103 in the A direction of every other remaining elastically deformable radial projecting portion 73 and with the one flat surface 77 of the base portion 71 flush with the surface 103 in such a manner as to protrude in the A direction from the surfaces 103 and 77 and extend radially over the surfaces 103 and 77. The axial projecting portion 76, which is formed on the flat surface 75 side in the same way as the axial projecting portion 78, is similarly formed with an identical height in the A direction to that of the axial projecting portion 78 and with an identical diameter, but may not be limited to the same, and may be formed with a different height in the A direction and a different radial length. Likewise, the protrusion 102, which is formed on the flat surface 75 side and the surface 103 side in the same way as the protrusion 104, is similarly formed with an identical height in the A direction to that of the protrusion 104 and with an identical length in the radial direction, but may not be limited to the same, and may be formed with a different height in the A direction and a different radial length.

In the intermediate interposed member 8 sandwiched between the base portions 11 and 16 in the A direction, each of the radial projecting portions 73 has a smaller rigidity than that of each of the axial projecting portions 13 and 18 of the coupling base bodies 3 and 5, is elastically deformable, and has side surfaces 79 and 80 in the R direction.

Each of the rotating shaft 2 and the base portion 11 of the coupling base body 3 is in contact with a surface 82 in the A direction of the axial projecting portion 76 at each of their surfaces 12 and 81 in the A direction. Each of the axial projecting portions 13 of the coupling base body 3 is disposed in every other radial projecting portion 73 gap of the intermediate interposed member 8 in the R direction, is in contact with both one side surface 79 in the R direction of one radial projecting portion 73 and the other side surface 80 in the R direction of another radial projecting portion 73 at its both side surfaces 21 and 22 in the R direction, extends across and beyond the surface 77 of the intermediate interposed member 8, and, at its distal end surface 83 in the A direction, opposes the surface 17 of the base portion 16 of the coupling base body 5 with a clearance 84 therebetween.

Each of the steering shaft 4 and the base portion 16 of the coupling base body 5 is in contact with a surface 86 in the A direction of the axial projecting portion 78 at each of their surfaces 17 and 85 in the A direction. Each of the axial projecting portions 18 of the coupling base body 5 is disposed in every other remaining radial projecting portion 73 gap of the intermediate interposed member 8 in the R direction, is in contact with both one side surface 79 in the R direction of another radial projecting portion 73 and the other side surface 80 in the R direction of one radial projecting portion 73 at its both side surfaces 23 and 24 in the R direction, extends across and beyond the surface 75 of the intermediate interposed member 8, and, at its distal end surface 87 in the A direction, opposes the surface 12 of the base portion 11 of the coupling base body 3 with a clearance 88 therebetween. The protrusion 102, which has a shorter length in the A direction (amount of projection) than the length in the A direction of the axial projecting portion 76, forms a clearance 105, which is smaller than the corresponding clearance 88, between its distal end surface 106 in the A direction and the surface 12. Similarly, the protrusion 104, which has a shorter length in the A direction (amount of projection) than the length in the A direction of the axial projecting portion 78, forms a clearance 107, which is smaller than the corresponding clearance 84, between its distal end surface 108 in the A direction and the surface 17.

With the electric power steering apparatus equipped with the above-described shaft coupling mechanism 1 for mutually coupling the rotating shaft 2 and the steering shaft 4, which are two rotating shafts, when the steering wheel is manually operated by the driver, the steering shaft 4 is rotated in the R direction, and the rotation of the steering shaft 4 in the R direction is transmitted to a drag link and the like as reciprocating motion through an unillustrated transmission mechanism such as gears, thereby imparting a steering force for steering wheels (wheels). In the manual operation of the steering wheel by the driver, when the electric motor which is controlled by a detection signal from a torque detector for detecting the torque applied to the steering wheel is operated, the rotating shaft 2 is rotated in the R direction. The rotation of the coupling base body 3 in the R direction is then transmitted to the axial projecting portions 18 of the coupling base body 5 through the pressing against the side surfaces 24 of the axial projecting portions 18 by the side surfaces 80 of the radial projecting portions 73 or through the pressing against the side surfaces 23 of the axial projecting portions 18 by the side surfaces 79 of the radial projecting portions 73 after the elastic deformation in the R direction of the radial projecting portions 73 due to the pressing against the side surfaces 79 by the side surfaces 21 of the axial projecting portions 13 or the pressing against the side surfaces 80 by the side surfaces 22 thereof. As a result, the torque of the rotating shaft 2 in the R direction is added to the torque of the steering shaft 4 in the R direction, thereby assisting the manual operation of the steering wheel by the driver.

With the shaft coupling mechanism 1 which couples the rotating shaft 2 and the steering shaft 4 by being disposed between the rotating shaft 2 and the steering shaft 4 so as to transmit the rotation of the rotating shaft 2 in the R direction to the steering shaft 4 which is the other rotating shaft, in both the state in which the steering wheel is not manually operated by the driver and the steering shaft 4 is not rotated in the R direction and the state in which the steering wheel is manually operated by the driver and the steering shaft 4 is rotated in the R direction, in a case where the relative rotation of the rotating shaft 2 in the R direction with respect to the steering shaft 4 is very small, the radial projecting portions 73 easily undergo elastic compressive deformation. As a result, such a very small relative rotation of the rotating shaft 2 in the R direction is almost not transmitted to the steering shaft 4. Thus, it is possible to reduce the transmission to the steering wheel of the impact at the time of the reversing of the electric motor and the brush vibration through the shaft coupling mechanism 1 and the steering shaft 4, thereby making it possible to prevent the steering feel from becoming uncomfortable. Moreover, it is possible to avoid contact between, on the one hand, the distal end surfaces 83 of the axial projecting portions 13 of the coupling base body 3 and, on the other hand, the surface 17 of the base portion 16 of the coupling base body 5 and contact between, on the one hand, the distal end surfaces 87 of the axial projecting portions 18 of the coupling base body 5 and, on the other hand, the surface 12 of the base portion 11 of the coupling base body 3. Furthermore, it is possible to allow the axial projecting portions 13 and 18 of the coupling base bodies 3 and 5 to be brought into contact with overall surfaces of the radial projecting portions 73 of the intermediate interposed member 8 in the R direction. Additionally, it is possible to eliminate the occurrence of collision noise in the relative displacement in the A direction of the rotating shaft 2 relative to the steering shaft 4, and unpleasant frictional noise is not generated in the transmission of the rotation in the R direction of the rotating shaft 2 to the steering shaft 4. Furthermore, it is possible to secure, as desired, a contact area in the R direction of each of the axial projecting portions 13 and 18 of the coupling base bodies 3 and 5 with respect to the radial projecting portion 73 of the intermediate interposed member 8, and to avoid excessive elastic compressive deformation of the radial projecting portions 73, thereby making it possible to improve the durability.

In addition, with the shaft coupling mechanism 100, even if the axial projecting portions 76 and 78 have undergone large elastic compressive deformation or permanent set, and the proper function of the axial projecting portions 76 and 78 has thereby been lost, the function of the axial projecting portions 76 and 78 can be substituted for by the contact of the protrusions 102 and 104 with respect to the surfaces 12 and 17.

Although the shaft coupling mechanism 1 in the above-described embodiment is comprised of a single intermediate interposed member 8, the shaft coupling mechanism 1 may alternatively be comprised of two or more intermediate interposed members 8. In addition, the numbers of the axial projecting portions 13 and 18 of the coupling base bodies 3 and 5 and the radial projecting portions 73 of the intermediate interposed member 8 are not limited to the aforementioned numbers. The surface 12 of the base portion 11 and the surface 81 of the rotating shaft 2 may not be flush with each other, and the surface 17 of the base portion 16 and the surface 85 of the rotating shaft 4 may similarly not be flush with each other.

### [Description of Reference Numerals]

- 1:: shaft coupling mechanism
- 2:: rotating shaft
- 3:: coupling base body
- 4:: steering shaft
- 5:: coupling base body
- 8:: intermediate interposed member

## Claims

1. A shaft coupling mechanism (1) for coupling first and second rotating shafts (2, 4) by being disposed between the first and second rotating shafts (2, 4) so as to transmit a rotation of the first rotating shaft (2) to the second rotating shaft (4), comprising: a first coupling base body (3) which is coupleable to the first rotating shaft (2), a second coupling base body (5) which is coupleable to the second rotating shaft (4), and an intermediate interposed member (8) which is interposed between said first and said second coupling base bodies (3, 5), wherein said first coupling base body (3) has a first base portion (11) and a first axial projecting portion (13) formed integrally with the first base portion (11) in such a manner as to project in an axial direction from one axial surface (12) of the first base portion (11) toward the second coupling base body (5), said second coupling base body (5) has a second base portion (16) and a second axial projecting portion (18) formed integrally with the second base portion (16) in such a manner as to project in the axial direction from one axial surface (17) of the second base portion (16) toward the first coupling base body (3), the first axial projecting portion (13)and the second axial projecting portion (18) are disposed with an interval therebetween in a direction about an axis, and said intermediate interposed member (8) has a third base portion (71) interposed between the first base portion (11) and the second base portion (16) in the axial direction, at least a pair of radial projecting portions (73) formed integrally on the third base portion (71) in such a manner as to be spaced apart from each other in the direction about the axis and project radially from an outer peripheral edge (72) of the third base portion (71), a third axial projecting portion (76) formed integrally on the third base portion (71) in such a manner as to project in the axial direction from one axial surface (75) of the third base portion (71), and a forth axial projecting portion (78) formed integrally on the third base portion (71) in such a manner as to project in the axial direction from another axial surface (77) of the third base portion (71), each of the pair of radial projecting portions (73) of said intermediate interposed member (8) having a smaller rigidity than the rigidity of the first and second axial projecting portions (13, 18) and being elastically deformable, at least one of the first rotating shaft (2) and the first base portion (11) of said first coupling base body (3) at its one axial surface being in contact with an axial surface (82) of the third axial projecting portion (76), while at least one of the second rotating shaft (4) and the second base portion (16) of said second coupling base body (5) at its one axial surface being in contact with an axial surface (86) of the forth axial projecting portion (78), and wherein the first axial projecting portion (13) of said first coupling base body (3) is disposed in one circumferential gap between adjacent radial projecting portions (73) in the direction about the axis, is in contact with both one side surface (79) in the direction about the axis of one radial projecting portion (73) and another side surface (80) in the direction about the axis of another radial projecting portion (73) at its both side surfaces (21, 22) in the direction about the axis, extends across and beyond the other axial surface (77) of the third base portion (71), and, at its axial distal end surface (83), opposes the one axial surface (17) of the second base portion (16) of said second coupling base body (5) with a clearance (84) therebetween, while the second axial projecting portion (18) of said second coupling base body (5) is disposed in another circumferential gap between adjacent radial projecting portions (73) in the direction about the axis, is in contact with both another side surface (80) in the direction about the axis of the one radial projecting portion (73) and one side surface (79) in the direction about the axis of the other radial projecting portion (73) at its both side surfaces (23, 24) in the direction about the axis, extends across and beyond the one axial surface (75) of the third base portion (71), and, at its axial distal end surface (87), opposes the one axial surface (12) of the first base portion (11) of said first coupling base body (3) with a clearance (88) therebetween, **characterized in that**
said intermediate interposed member (8) has one protrusion (102) formed integrally on and projecting in the axial direction from the one axial surface (75) of the third base portion (71) and another protrusion (104) formed integrally on and projecting in the axial direction from the other axial surface (77) of the third base portion (71), the one protrusion (102) forming a clearance (105), which is smaller than the corresponding clearance (88), between its axial distal end surface (106) and the one axial surface (12) of the first base portion (11) of said first coupling base body (3), while the other protrusion (104) forming a clearance (107), which is smaller than the corresponding clearance (84), between its axial distal end surface (108) and the one axial surface (17) of the second base portion (16) of said second coupling base body (5).

## Patentansprüche

1. Wellenkupplungsmechanismus (1) zum Kuppeln einer ersten und zweiten Drehwelle (2, 4) durch Angeordnetsein zwischen der ersten und zweiten Drehwelle (2, 4), um eine Drehung der ersten Drehwelle (2) zu der zweiten Drehwelle (4) zu übertragen, umfassend:
einen ersten Kupplungsbasiskörper (3), der mit der ersten Drehwelle (2) kuppelbar ist, einen zweiten Kupplungsbasiskörper (5), der mit der zweiten Drehwelle (4) kuppelbar ist, und ein dazwischen eingefügtes Element (8), das zwischen dem ersten und dem zweiten Kupplungsbasiskörper (3, 5) eingefügt ist, wobei der erste Kupplungsbasiskörper (3) einen ersten Basisabschnitt (11) und einen ersten axialen vorstehenden Abschnitt (13), der einstückig mit dem ersten Basisabschnitt (11) auf eine solche Weise gebildet ist, um in einer axialen Richtung von einer axialen Oberfläche (12) des ersten Basisabschnitts (11) zum zweiten Kupplungsbasiskörper (5) vorzustehen, aufweist, der zweite Kupplungsbasiskörper (5) einen zweiten Basisabschnitt (16) und einen zweiten axialen vorstehenden Abschnitt (18), der einstückig mit dem zweiten Basisabschnitt (16) auf eine solche Weise gebildet ist, um in der axialen Richtung von einer axialen Oberfläche (17) des zweiten Basisabschnitts (16) zum ersten Kupplungsbasiskörper (3) vorzustehen, aufweist, der erste axiale vorstehende Abschnitt (13) und der zweite axiale vorstehende Abschnitt (18) mit einem Abstand dazwischen in einer Richtung um eine Achse angeordnet sind und das dazwischen eingefügte Element (8) einen dritten Basisabschnitt (71), der zwischen dem ersten Basisabschnitt (11) und dem zweiten Basisabschnitt (16) in der axialen Richtung eingefügt ist, mindestens ein Paar radialer vorstehender Abschnitte (73), die einstückig an dem dritten Basisabschnitt (71) auf eine solche Weise gebildet sind, um voneinander in der Richtung um die Achse beabstandet zu sein und radial von einer Außenumfangskante (72) des dritten Basisabschnitts (71) vorzustehen, einen dritten axialen vorstehenden Abschnitt (76), der einstückig an dem dritten Basisabschnitt (71) auf eine solche Weise gebildet ist, um in der axialen Richtung von einer axialen Oberfläche (75) des dritten Basisabschnitts (71) vorzustehen, und einen vierten axialen vorstehenden Abschnitt (78), der einstückig an dem dritten Basisabschnitt (71) auf eine solche Weise gebildet ist, um in der axialen Richtung von einer anderen axialen Oberfläche (77) des dritten Basisabschnitts (71) vorzustehen, aufweist, wobei jeder von dem Paar radialer vorstehender Abschnitte (73) des dazwischen eingefügten Elements (8) eine geringere Steifigkeit als die Steifigkeit des ersten und zweiten axialen vorstehenden Abschnitts (13, 18) aufweist und elastisch verformbar ist, wobei mindestens eines von der ersten Drehwelle (2) und dem ersten Basisabschnitt (11) des ersten Kupplungsbasiskörpers (3) an ihrer/seiner einen axialen Oberfläche in Kontakt mit einer axialen Oberfläche (82) des dritten axialen vorstehenden Abschnitts (76) ist, während mindestens eines von der zweiten Drehwelle (4) und dem zweiten Basisabschnitt (16) des zweiten Kupplungsbasiskörpers (5) an ihrer/seiner einen axialen Oberfläche in Kontakt mit einer axialen Oberfläche (86) des vierten axialen vorstehenden Abschnitts (78) ist, und wobei der erste axiale vorstehende Abschnitt (13) des ersten Kupplungsbasiskörpers (3) in einem Umfangsspalt zwischen angrenzenden radialen vorstehenden Abschnitten (73) in der Richtung um die Achse angeordnet ist, in Kontakt mit sowohl einer Seitenfläche (79) in der Richtung um die Achse eines radialen vorstehenden Abschnitts (73) als auch einer anderen Seitenfläche (80) in der Richtung um die Achse eines anderen radialen vorstehenden Abschnitts (73) an seinen beiden Seitenflächen (21, 22) in der Richtung um die Achse ist, sich über die andere axiale Oberfläche (77) des dritten Basisabschnitts (71) und darüber hinaus erstreckt und an seiner axialen distalen Endfläche (83) der einen axialen Oberfläche (17) des zweiten Basisabschnitts (16) des zweiten Kupplungsbasiskörpers (5) mit einem Zwischenraum (84) dazwischen gegenüberliegt, während der zweite axiale vorstehende Abschnitt (18) des zweiten Kupplungsbasiskörpers (5) in einem anderen Umfangsspalt zwischen angrenzenden radialen vorstehenden Abschnitten (73) in der Richtung um die Achse angeordnet ist, in Kontakt mit sowohl einer anderen Seitenfläche (80) in der Richtung um die Achse des einen radialen vorstehenden Abschnitts (73) als auch einer Seitenfläche (79) in der Richtung um die Achse des anderen radialen vorstehenden Abschnitts (73) an seinen beiden Seitenflächen (23, 24) in der Richtung um die Achse ist, sich über die eine axiale Oberfläche (75) des dritten Basisabschnitts (71) und darüber hinaus erstreckt und an seiner axialen distalen Endfläche (87) der einen axialen Oberfläche (12) des ersten Basisabschnitts (11) des ersten Kupplungsbasiskörpers (3) mit einem Zwischenraum (88) dazwischen gegenüberliegt, **dadurch gekennzeichnet, dass**
das dazwischen eingefügte Element (8) einen Vorsprung (102), der einstückig an der einen axialen Oberfläche (75) des dritten Basisabschnitts (71) gebildet ist und von dieser in der axialen Richtung vorsteht, und einen anderen Vorsprung (104), der einstückig an der anderen axialen Oberfläche (77) des dritten Basisabschnitts (71) gebildet ist und von dieser in der axialen Richtung vorsteht, aufweist, wobei der eine Vorsprung (102) einen Zwischenraum (105), der kleiner als der entsprechende Zwischenraum (88) ist, zwischen seiner axialen distalen Endfläche (106) und der einen axialen Oberfläche (12) des ersten Basisabschnitts (11) des ersten Kupplungsbasiskörpers (3) bildet, während der andere Vorsprung (104) einen Zwischenraum (107), der kleiner als der entsprechende Zwischenraum (84) ist, zwischen seiner axialen distalen Endfläche (108) und der einen axialen Oberfläche (17) des zweiten Basisabschnitts (16) des zweiten Kupplungsbasiskörpers (5) bildet.

## Revendications

1. Mécanisme de couplage d'arbres (1) destiné à coupler des premier et deuxième arbres rotatifs (2, 4) en étant disposé entre les premier et deuxième arbres rotatifs (2, 4) de manière à transmettre une rotation du premier arbre rotatif (2) au deuxième arbre rotatif (4), comprenant :
un premier corps de base de couplage (3) qui peut être couplé au premier arbre rotatif (2), un deuxième corps de base de couplage (5) qui peut être couplé au deuxième arbre rotatif (4), et un élément intercalé intermédiaire (8) qui est intercalé entre ledit premier et ledit deuxième corps de base de couplage (3, 5), ledit premier corps de base de couplage (3) comportant une première partie de base (11) et une première partie en saillie axiale (13) formée d'un seul tenant avec la première partie de base (11) de manière à faire saillie dans une direction axiale depuis une surface axiale (12) de la première partie de base (11) vers le deuxième corps de base de couplage (5), ledit deuxième corps de base de couplage (5) comportant une deuxième partie de base (16) et une deuxième partie en saillie axiale (18) formée d'un seul tenant avec la deuxième partie de base (16) de manière à faire saillie dans la direction axiale depuis une surface axiale (17) de la deuxième partie de base (16) vers le premier corps de base de couplage (3), la première partie en saillie axiale (13) et la deuxième partie en saillie axiale (18) étant disposées avec un intervalle entre celles-ci dans une direction autour d'un axe, et ledit élément intercalé intermédiaire (8) comportant une troisième partie de base (71) intercalée entre la première partie de base (11) et la deuxième partie de base (16) dans la direction axiale, au moins une paire de parties en saillie radiales (73) formées d'un seul tenant sur la troisième partie de base (71) de manière à être espacées l'une de l'autre dans la direction autour de l'axe et à faire saillie radialement depuis un bord périphérique externe (72) de la troisième partie de base (71), une troisième partie en saillie axiale (76) formée d'un seul tenant sur la troisième partie de base (71) de manière à faire saillie dans la direction axiale depuis une surface axiale (75) de la troisième partie de base (71), et une quatrième partie en saillie axiale (78) formée d'un seul tenant sur la troisième partie de base (71) de manière à faire saillie dans la direction axiale depuis une autre surface axiale (77) de la troisième partie de base (71), chacune de la paire de parties en saillie radiales (73) dudit élément intercalé intermédiaire (8) présentant une rigidité inférieure à la rigidité des première et deuxième parties en saillie axiales (13, 18) et étant élastiquement déformable, le premier arbre rotatif (2) et/ou la première partie de base (11) dudit premier corps de base de couplage (3) au niveau de sa première surface axiale étant en contact avec une surface axiale (82) de la troisième partie en saillie axiale (76), tandis que le deuxième arbre rotatif (4) et/ou la deuxième partie de base (16) dudit deuxième corps de base de couplage (5) au niveau de sa première surface axiale étant en contact avec une surface axiale (86) de la quatrième partie en saillie axiale (78), et la première partie en saillie axiale (13) dudit premier corps de base de couplage (3) étant disposée dans un espacement circonférentiel entre des parties en saillie radiales adjacentes (73) dans la direction autour de l'axe, est en contact avec à la fois une surface latérale (79) dans la direction autour de l'axe d'une partie en saillie radiale (73) et une autre surface latérale (80) dans la direction autour de l'axe d'une autre partie en saillie radiale (73) au niveau de ses deux surfaces latérales (21, 22) dans la direction autour de l'axe, s'étend sur toute l'autre surface axiale (77) de la troisième partie de base (71) et au-delà, et au niveau de sa surface d'extrémité distale axiale (83), fait face à la première surface axiale (17) de la deuxième partie de base (16) dudit deuxième corps de base de couplage (5) avec un écart (84) entre les deux, tandis que la deuxième partie en saillie axiale (18) dudit deuxième corps de base de couplage (5) est disposée dans un autre espacement circonférentiel entre des parties en saillie radiales adjacentes (73) dans la direction autour de l'axe, est en contact avec à la fois une autre surface latérale (80) dans la direction autour de l'axe de la première partie en saillie radiale (73) et une surface latérale (79) dans la direction autour de l'axe de l'autre partie en saillie radiale (73) au niveau de ses deux surfaces latérales (23, 24) dans la direction autour de l'axe, s'étend sur toute la première surface axiale (75) de la troisième partie de base (71) et au-delà, et, au niveau de sa surface d'extrémité distale axiale (87), fait face à la première surface axiale (12) de la première partie de base (11) dudit premier corps de base de couplage (3) avec un écart (88) entre les deux, **caractérisé en ce que**
ledit élément intercalé intermédiaire (8) présente une saillie (102) formée d'un seul tenant sur la première surface axiale (75) de la troisième partie de base (71) et faisant saillie dans la direction axiale de celle-là et une autre saillie (104) formée d'un seul tenant sur la deuxième surface axiale (77) de la troisième partie de base (71) et faisant saillie dans la direction axiale de celle-là, la première saillie (102) formant un écart (105), qui est inférieur à l'écart correspondant (88), entre sa surface d'extrémité distale axiale (106) et la première surface axiale (12) de la première partie de base (11) dudit premier corps de base de couplage (3), tandis que la deuxième saillie (104) formant un écart (107), qui est inférieur à l'écart correspondant (84), entre sa surface d'extrémité distale axiale (108) et la première surface axiale (17) de la deuxième partie de base (16) dudit deuxième corps de base de couplage (5).
